# EUROPEAN PATENT SPECIFICATION

(11) **EP 4 083 566 B1**
(45) Date of publication and mention of the grant of the patent: **31.01.2024**
(21) Application number: 22165464.3
(22) Date of filing: 30.03.2022
(51) Int. Cl.: F41A 35/02, F41G 1/38

(54) **COVER SYSTEM FOR LASER ACCESSORY DEVICE**
ABDECKSYSTEM FÜR LASERZUBEHÖRVORRICHTUNG
SYSTÈME DE COUVERCLE POUR DISPOSITIF ACCESSOIRE LASER

(30) Priority: 26.04.2021 US 202163179732 P; 29.03.2022 US 202217706795
(43) Date of publication of application: 02.11.2022
(73) Proprietor: Wilcox Industries Corp., Newington, NH 03801 (US)
(72) Inventor: TEETZEL, James W., Newington, 03908 (US); LEMIRE, Gary M., Newington, 03908 (US)
(74) Representative: FRKelly

(56) References cited:
- EP-A1- 3 314 195
- DE-U1-202019 106 217
- KR-B1- 101 550 146
- US-A1- 2014 317 988
- US-A1- 2018 180 384

## Description

### CROSS REFERENCE TO RELATED APPLICATION

### BACKGROUND

The present invention relates to laser accessory devices for firearms or other weapons and modular safety cover systems for such laser accessory devices.

US2014317988A1 discloses a weapon-mountable laser distractor having an enclosure (100) with a top surface and bottom surface connected to each other by two side surfaces, a from surface and a rear surface. The top surface includes an articulated mounting adapter (150), the bottom surface includes controls (201), the front surface includes an integral optic cover (110) and a plurality of apertures (120, 130, 140). The enclosure (100) protects and surrounds a laser device including a battery module (490) in communication with an electronic module (470). The electronic module (470) controls a plurality of light generating modules (400, 405,410) which provide light to a plurality of optic modules (420, 425, 430). A controls module (440) or remote module (460) provides instructions to the electronic module. A display module (480) and an indicator module (450) are also provided.

### SUMMARY

The present disclosure provides a laser accessory device as detailed in claim 1. Advantageous features are provided in dependent claims.

According to the invention, a laser accessory device comprises a housing having a front side having a port, a rear side opposite the front side, a left side, a right side opposite the left side, a top side, and a bottom side opposite the top side. One or more laser emitters are disposed within the housing and are configured to emit a beam through the port. A first cover assembly is positioned on the front side and includes a first safety cover and a first frame securing the first safety cover to the housing. The first safety cover is movable between a closed position covering the port and an open position not covering the port.

In a more limited aspect, the first safety cover juts out beyond the front side to form a visor above the port when the first safety cover is in the open position.

In another more limited aspect, the first safety cover is stowed on the housing when the first safety cover is in the open position.

In yet another more limited aspect, the first safety cover is stowed on the top side of the housing when the first safety cover is in the open position.

According to the invention, the first cover assembly is removable from the housing, and the laser accessory device further comprises a second cover assembly for positioning on the front side in place of the first cover assembly. The second cover assembly includes a second safety cover and a second frame for securing the second safety cover to the housing, the second safety cover being movable between a closed position covering the port and an open position not covering the port.

According to the invention, the first safety cover juts out beyond the front side to form a visor above the port when the first cover assembly is attached to the housing and the first safety cover is in the open position, and the second safety cover is stowed on the top side of the housing when the second cover assembly is attached to the housing and the second safety cover is in the open position.

In yet another more limited aspect, the one or more laser emitters comprises one or more laser diodes.

In yet another more limited aspect, the laser accessory device further comprises a power supply received within the housing and operably connected to the laser diode for energizing the one or more laser emitters.

In yet another more limited aspect, the power supply comprises a battery disposed within a battery compartment in the housing.

In yet another more limited aspect, the laser accessory device further comprises a battery compartment cover configured to releasably cover the battery compartment.

In yet another more limited aspect, the bottom side comprises a clamp for coupling the laser accessory device to a weapon accessory rail.

In yet another more limited aspect, the laser accessory device further comprises one or more activation switches on the top side which are configured to operate the one or more laser emitters.

In yet another more limited aspect, the one or more laser emitters comprises one or more aiming lasers, one or more illumination lasers, or a combination thereof.

In yet another more limited aspect, the one or more laser emitters includes multiple laser emitters.

In yet another more limited aspect, each of the one or more laser emitters emits at one or more wavelengths within a spectrum selected from the group consisting of ultraviolet, visible, and infrared spectra.

In yet another more limited aspect, the one or more laser emitters comprise one or more of a visible light laser for aiming, a visible light laser for illumination, an infrared light laser for aiming, and an infrared light laser for illumination.

In yet another more limited aspect, the first cover assembly is configured to block laser beam emissions from the one or more laser emitters when the first safety cover is in the closed position.

In yet another more limited aspect, the first cover assembly is configured to attenuate laser beam emission intensity from the one or more laser emitters when the first safety cover is in the closed position.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is an isometric view of an exemplary laser accessory device having a first interchangeable lens cover assembly in the closed or deployed position.
FIG. 2 is an isometric view of the laser accessory device appearing in FIG. 1, wherein the first interchangeable lens cover assembly is in the stowed position.
FIG. 3 is an isometric view of the laser accessory device appearing in FIGS. 1 and 2, wherein a second interchangeable lens cover assembly, shown in the deployed position, is used in place of the first interchangeable lens cover assembly.
FIG. 4 is an isometric view of the laser accessory device configuration appearing in FIG. 3, wherein the second interchangeable lens cover assembly is shown in the stowed position.
FIG. 5 is a partially exploded view illustrating the modular nature of the first and second interchangeable lens cover assemblies.
FIG. 6A is an isometric view of the first interchangeable lens cover assembly taken from the rear and side.
FIG. 6B is an exploded, isometric view of the first interchangeable lens cover assembly taken from the rear and side.
FIG. 7A is an isometric view of the second interchangeable lens cover assembly taken from the rear and side.
FIG. 7B is an exploded, isometric view of the second interchangeable lens cover assembly taken from the rear and side.

### DETAILED DESCRIPTION OF THE PREFERRED EMBODIMENTS

Firearms and other weapon systems commonly utilize laser emitters for a number of purposes. For example, aiming lasers having one or more laser emitters bore-sighted to the barrel of a firearm or other weapon are used as weapon sights for aiming the weapon. Similarly, laser illuminators emit a beam to illuminate a target area and are often paired with aiming lasers. Laser emitters are also used to mark or designate enemy targets to pinpoint the location of enemy targets and reduce the chance that friendly forces are mistaken as an enemy target. Commonly, laser accessory devices will employ a lens cap or cover to cover the laser emitters when the unit is not in use, e.g., to keep the laser lenses clean and/or dry as well as preventing accidental laser emissions. The present development contemplates a new and improved cover system for laser accessory devices.

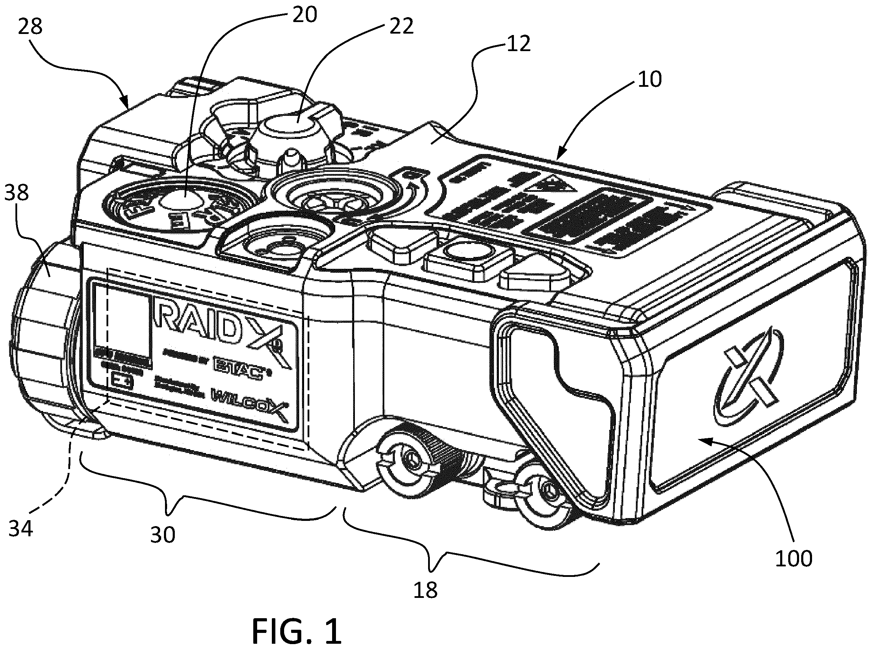

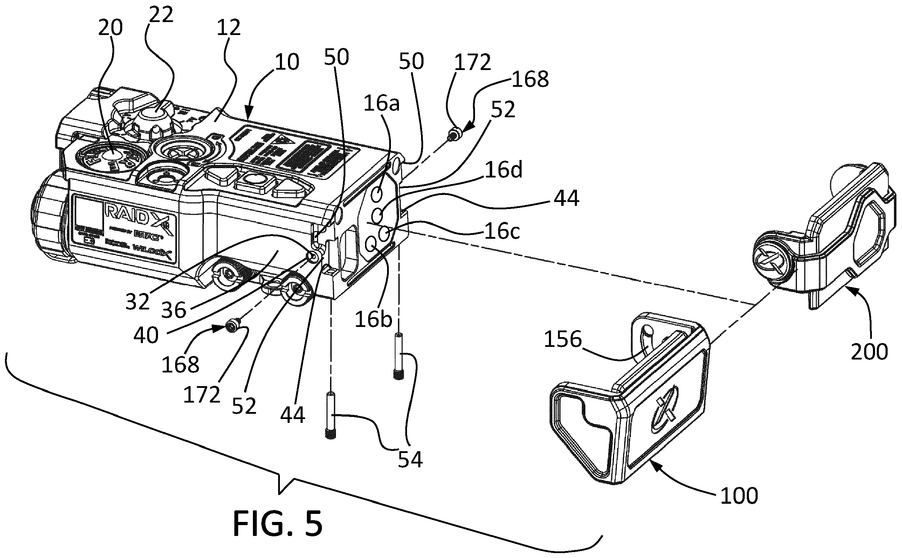

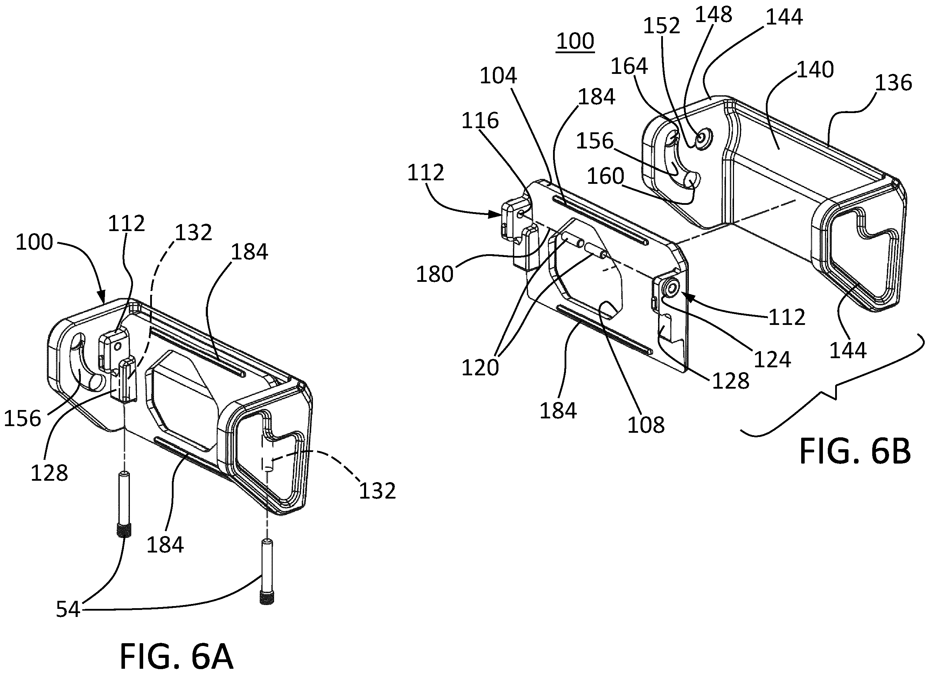

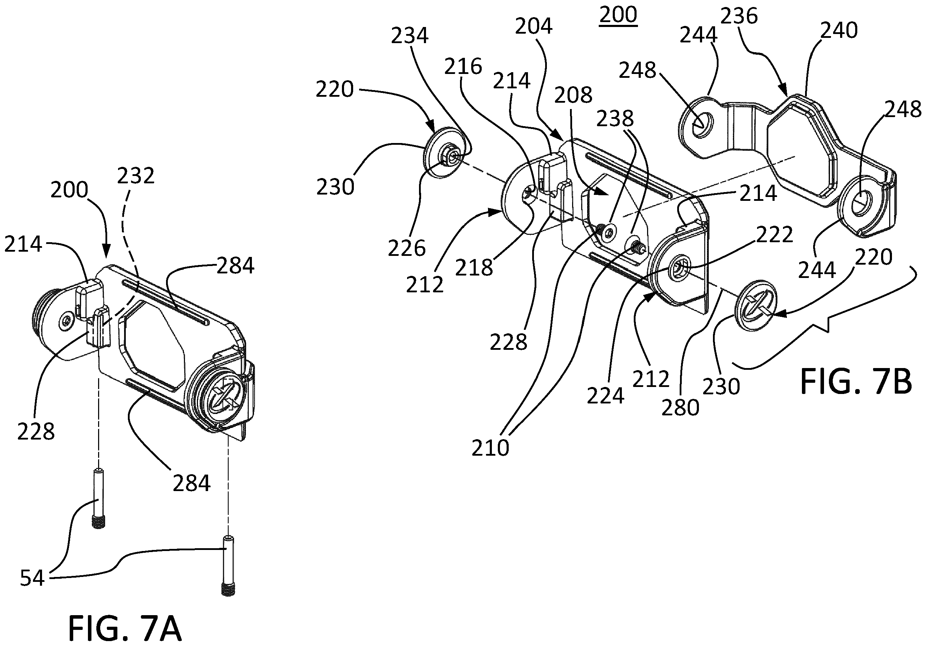

Referring now to the drawings, FIGS. 1-5, 6A, 6B, 7A, and 7B illustrate an exemplary laser accessory device comprising a laser accessory device **10** employing a first interchangeable cover assembly **100** and a second interchangeable cover assembly **200**. The laser accessory device **10** includes a main housing **12**. The main housing **12** includes a lens port **14** on a forward facing end thereof. The housing **12** encloses one or more laser emitters **16a**, **16b**, **16c**, and **16d**, which can be actuated to emit a laser beam toward a target via the laser lens port **14**. The laser emitters **16a-16d** may include various combinations of aiming lasers and laser illuminators, which may emit in wavelengths within a spectrum selected from visible, infrared (IR), near infrared, short wave infrared (SWIR), ultraviolet (UV), and others. A rail clamp or grabber assembly **18** is provided on the housing **12** for attaching the unit **10** to a weapon accessory interface. In certain embodiments, the weapon is a firearm such as a military or tactical rifle, such as a Picatinny rail interface (e.g., as specified in MIL-STD-1913, STANAG 2324), or the like. A fire button **20** is provided to actuate the selected laser emitter(s).

As used herein, terms denoting direction or orientation, such as left, right, front, rear, upper, lower, horizontal, vertical, etc., refer to the orientation of the units **10**, **100**, and **200** as they appear in the drawings, wherein the laser lens port **14** is considered to be disposed on the front of the unit **10**, the controls as described below are considered to be disposed on the top of the unit **10**, and the rail grabber assembly **18** is considered to be disposed on the bottom of the unit **10**.

The term "coupled" or "operatively coupled," as used herein, is defined as indirectly or directly connected. All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

In certain embodiments, the operational mode of the unit **10** is selected via a mode selection knob **22** and a keypad **24** comprising one or more buttons or keys **26a**, **26b**, and **26c**, are provided to control various functions and parameters of the unit **10**, including laser power intensity level and others. In certain embodiments, a display **28** is disposed on a rearward facing end of the housing **12** to provide output to the user in human-viewable form. A battery compartment **30** houses one or more batteries **34** for providing electrical power for the unit **10**. A battery compartment cover **38** provides access to the battery compartment **30**. In certain embodiments, the laser accessory device may be a RAID-X (TM) aiming/illumination device available from Wilcox Industries Corp. of Newington, New Hampshire. However, it will be recognized that the modular cover system herein may be adapted for other laser accessory devices.

With respect to FIGS. 1, 2, 6A, and 6B, the first interchangeable cover assembly **100** includes a frame **104** having a central aperture **108** aligned with the lens port **14** on the unit **10**. A pair of arms **112** extends from the rearward facing surface of the frame **104** on opposite transverse sides of the frame. Each of the arms **112** has a through hole **116** receiving a respective pivot pin **120**. The exterior or outward facing surface of each arm **112** includes a protrusion or boss **124** which is concentric with the respective opening **116**.

Each of the arms **112** further includes a downward extending portion **128** having a generally vertical, internally threaded opening **132**. The arms **112** and downward extending portion **128** are received in complementary recess features **50** and **52**, respectively, on the front surface of the housing **12** to provide a secure, keyed retention of the frame **104** on the housing **12**. The frame **104** includes sealing members **184** along the top and bottom edges to provide a sealing interference between the frame **104** and the housing **12** to keep moisture and other environmental contamination away from the laser port **14**.

The first interchangeable cover assembly **100** further includes a safety cover in the form of a visor **136** pivotally attached to the frame **104**. The visor **136** includes a front plate **140** and a pair of ears **144** extending in the rearward direction on opposite transverse sides of the front plate **140**. Each of the ears **144** has a transversely extending blind hole or bore **148** on the inward side thereof. Each bore **148**, in turn, further includes a counterbore **152** disposed on an inward surface of the respective ear **144**. Each counterbore **152** has a diameter and depth to receive the respective boss **124**. Each of the ears **144** further include a curved channel or groove **156**. Each curved channel **156**, in turn, has a first blind hole or bore **160** at a first end thereof and a second blind hole or bore **164** at a second end thereof.

In certain embodiments, the safety cover **136** is formed of a material that blocks laser emissions. In alternative embodiments, the safety cover **136** may be formed of a material that reduces the intensity of the laser emissions to a level that is generally considered eye-safe.

To assemble the visor **136** to the visor frame **104**, the frame is positioned between the ears **144** and the boss **124** is received within the counterbore **152**. In certain embodiments, the visor **136** and/or the visor frame **104** are formed of a flexible or resilient material for ease of assembly. In certain embodiments, the visor **136** and visor frame **104** are formed of a polymer material or a polymer/fiber composite material. Each pivot pin **120** is passed through the respective opening **116** and into the blind bore **148**.

To assemble the visor assembly **100** to the housing **12**, pivot stop screws **168** are removably threaded into complementary threaded openings **32** on opposite sides of the housing **12**. Each of the pivot stop screws **168** includes a head portion **172** which protrudes from the adjacent side surface **36** of the housing **12**. In certain embodiments, each opening **32** includes a counter bore **40** having a diameter and depth to receive a portion of the head portion **172**.

The visor assembly **100** is then placed over the front end of the housing **12** until each head portion **172** is received in the respective curved channel **156**. In certain embodiments, the visor assembly **100** components are formed of flexible or resilient materials to allow the visor assembly **100** to flex or deform slightly to aid in positioning the head portions **172** in the grooves **156**. First and second threaded fasteners **54** are then passed through respective openings **44** in the housing **12** and removably engage a respective one of the threaded openings **132** on the visor frame **104**.

In operation, when the visor **136** is in the closed position (see FIG. 1), each head portion **172** of the pivot stop screws **168** is received within a respective one of the first bores **160**. When it is desired to open the cover assembly **100**, the visor **136** is pivoted upward in relation to the frame **104** about the pivot pins **120** which define a pivot axis **180**. As the visor **136** is pivoted, the head portions **172** run in the respective curved channels **156** until the head portions engage the respective bores **164**. The bores **160** and **164** cooperate with the head portions **172** to provide a positive stop or detent when the visor **136** is in the deployed and stowed positions, respectively.

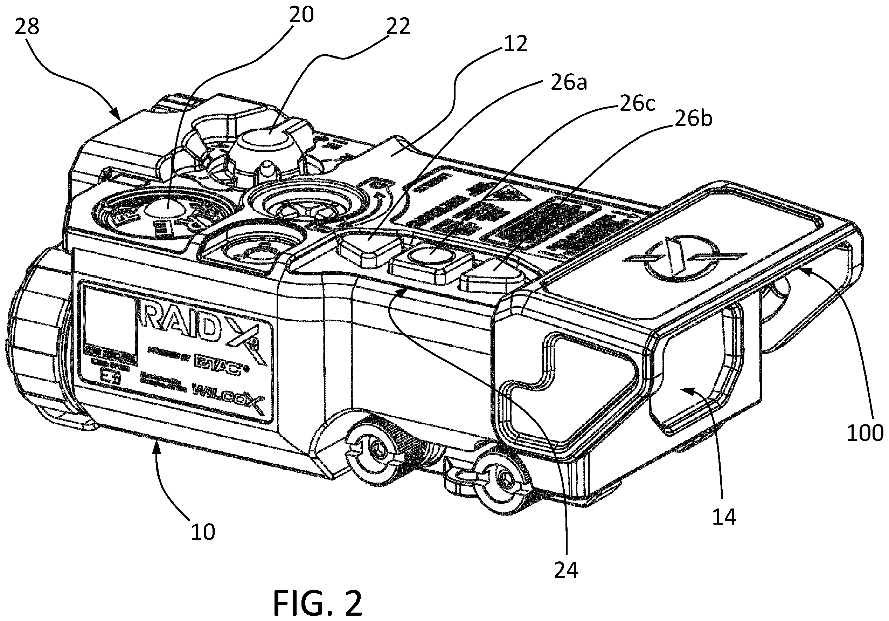

When the visor **136** is in the open position (see FIG. 2), the visor plate portion **140** and ears **144** extend beyond a front surface **48** of the housing **12**. In this manner, the visor **136** acts as a rain/precipitation shield to protect the laser port from rain, snow, etc., when the unit **10** is used in the rain or other precipitation conditions. The protruding visor **136** also advantageously acts as a shield against off-angle viewing of the aiming and illumination beam emitters, thereby making it more difficult to pinpoint the location of the user.

When it is desired to remove the visor assembly **100**, the threaded fasteners **54** are removed that the visor assembly is manually removed by disengaging the head portions **172** from the grooves **156**. The pivot stop screws **168** may also be removed from the housing **12** when the visor assembly **100** is not in use.

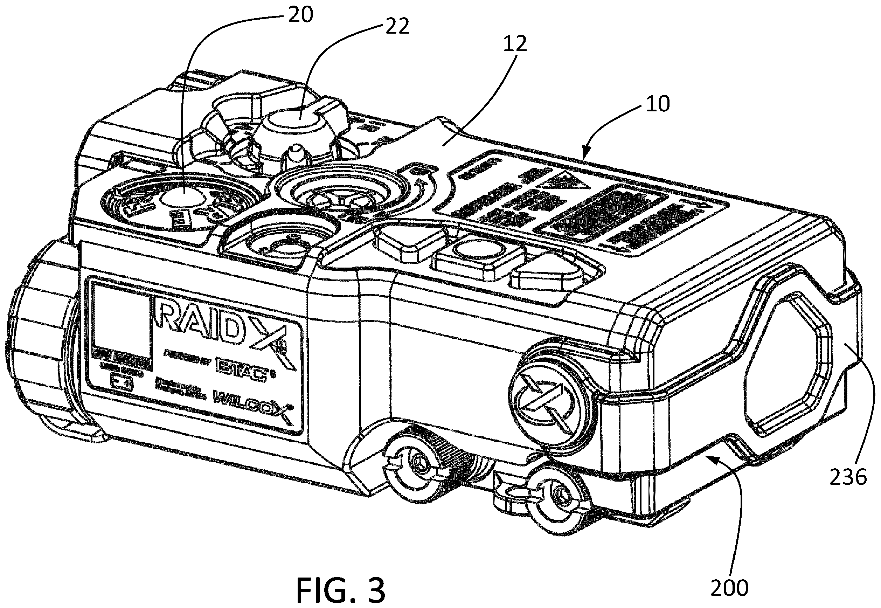

With reference now to FIGS. 3, 4, 7A, and 7B, the laser accessory device **10** appears with the second interchangeable cover assembly **200** used in place of the first interchangeable cover assembly **100**. The cover assembly **200** includes a frame **204** having a central aperture **208** aligned with the lens port **14** on the unit 10. A pair of arms **212** extends from the rearward facing surface of the frame **204**. Each of the arms **212** has a through hole or bore **216**. Each bore **216** includes a countersink **218** on the inward facing side thereof. On the outward facing side of each arm **212**, there is a protruding boss **224** which is concentric with the bore **216**. Each boss **224** includes a keyed or noncircular (e.g., generally rectangular in the illustrated embodiment) counterbore **222** which is concentric with the bore **216**. The counterbore **222** receives a respective complementary noncircular post portion **226** of a pivot cap 220. The pivot cap **220** further includes an enlarged diameter head **230**.

Each of the arms **212** further includes a first protrusion **214** which is complementary with the recess feature **50** on the housing **12** for providing a secure, keyed retention of the frame **204** on the housing **12**. Each of the arms **212** also includes a second protrusion **228** having a generally vertical, internally threaded opening **232**. The second protrusion **228** is received in the complementary recess feature **52** on the front surface of the housing **12** to additionally provide a secure, keyed retention of the frame **204** on the housing **12**. The frame **204** includes sealing members **284** along the top and bottom edges to provide a sealing interference between the frame **204** and the housing **12** to keep moisture and other environmental contamination away from the laser port **14**.

The second interchangeable cover assembly **200** further includes a safety cover **236** pivotally attached to the frame **204**. The cover **236** includes a front cover panel **240** and a pair of ears **244** extending in the rearward direction on opposite transverse sides of the front panel **240**. The front panel **240** is complementary with and covers the laser port **14** when in the closed position. Each of the ears **244** has an aperture **248** configured to receive the boss **224** therein. In certain embodiments, the safety cover **236** is formed of a material that blocks laser emissions. In alternative embodiments, the safety cover **236** may be formed of a material that reduces the intensity of the laser emissions to a level that is generally considered eye-safe.

To assemble the safety cover **236** to the frame **204**, the frame **204** is positioned between the ears **244** and each boss **224** is received within a respective opening **248**. In certain embodiments, the frame **204** is formed of a flexible or resilient material such as a molded plastic material and the safety cover **236** is formed of a rubber or other elastomeric material, such as a natural or synthetic rubber material. The post **226** of each pivot cap **220** is received in the respective noncircular counterbore **222**. Threaded fasteners **210** pass through the holes **216** and threadably engage internal threads within a central opening **234** in the respective posts **226**. In certain embodiments, the fasteners **210** are flathead screws having a head portion **238** which is received in the countersink **218** so that each of the head portions **238** is flush with the inward facing surface of the respective arm **212**.

To assemble the cover assembly **200** to the housing **12**, the cover assembly **200** is placed over the front end of the housing **12** until the protrusions **214** and **228** engage the respective complementary recesses **50** and **52** on the housing **112**. First and second threaded fasteners **54** are then passed through respective openings **44** in the housing **12** and removably engage a respective one of the threaded openings **232** on the frame **204**.

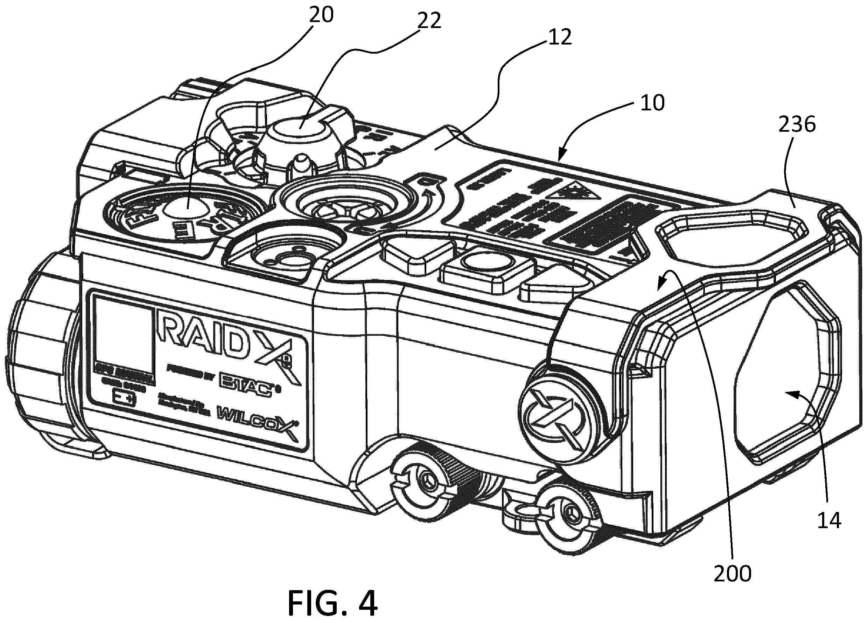

FIG. 3 illustrates the safety cover **236** in the closed or deployed position. When it is desired to open the cover assembly **200** to the open or stowed position as shown in FIG. 4, the safety cover **236** is pivoted upward in relation to the frame **204** about the pivot caps **220**, which define a pivot axis **280**. As the cover **204** is pivoted, rotation of the pivot cap **220** is resisted because of the keyed or noncircular configuration of the post **226** and the counterbore **222**, thereby reducing the chance of inadvertently unscrewing the fasteners **210** from the pivot cap **220**.

When it is desired to remove the safety cover assembly **200** from the unit **10**, the threaded fasteners **54** are removed and the safety cover assembly **200** is manually removed by disengaging the protrusions **214**, **228** from the respective recesses **50**, **52**.

The invention has been described with reference to the preferred embodiments. Modifications and alterations will occur to others upon a reading and understanding of the preceding detailed description. It is intended that the invention be construed as including all such modifications and alterations insofar as they come within the scope of the appended claims.

## Claims

1. A laser accessory device (10), comprising:
a housing (12) having a front side having a port (14), a rear side opposite the front side, a left side, a right side opposite the left side, a top side, and a bottom side opposite the top side;
one or more laser emitters (16a, 16b, 16c, 16c) within the housing configured to emit a beam through the port;
**characterised in that** the laser accessory device comprising a kit of first and second interchangeable cover assemblies (100, 200), each of said cover assemblies being selectively attachable and removable from the housing;
the first cover assembly (100) for positioning on the front side, the first cover assembly including a first safety cover (136) and a first frame (104) securing the first safety cover to the housing, the first safety cover movable between a closed position covering the port and an open position not covering the port, the laser accessory device further comprising:
the second cover (200) assembly for positioning on the front side in place of the first cover assembly, the second cover assembly including a second safety cover (236) and a second frame (204) for securing the second safety cover to the housing, the second safety cover movable between a closed position covering the port and an open position not covering the port,
wherein the first safety cover (136) juts out beyond the front side to form a visor (136) above the port when the first cover assembly (100) is attached to the housing and the first safety cover is in the open position, and further wherein the second safety (200) cover is stowed on the top side of the housing when the second safety cover assembly is attached to the housing and the second safety cover is in the open position.

2. The laser accessory device (10) of claim 1, wherein the first safety cover (136) is stowed on the housing when the first safety cover is in the open position.

3. The laser accessory device (10) of claim 1, wherein the first safety cover (136) is stowed on the top side of the housing when the first safety cover is in the open position.

4. The laser accessory device (10) of claim 1, wherein the one or more laser emitters (16a, 16b, 16c, 16c) comprises one or more laser diodes.

5. The laser accessory device (10) of claim 1, further comprising a power supply received within the housing (12) and operably connected to the laser diode for energizing the one or more laser emitters (16a, 16b, 16c, 16c).

6. The laser accessory device (10) of claim 5, wherein the power supply comprises a battery disposed within a battery compartment (30) in the housing.

7. The laser accessory device (10) of claim 6, further comprising a battery compartment cover (38) configured to releasably cover the battery compartment (30).

8. The laser accessory device (10) of claim 1, the bottom side comprising a clamp (18) for coupling the laser accessory device to a weapon accessory rail.

9. The laser accessory device (10) of claim 1, further comprising one or more activation switches on the top side and configured to operate the one or more laser emitters (16a, 16b, 16c, 16c).

10. The laser accessory device (10) of claim 1, wherein the one or more laser emitters (16a, 16b, 16c, 16c) comprises one or more aiming lasers, one or more illumination lasers, or a combination thereof.

11. The laser accessory device (10) of claim 1, wherein the one or more laser emitters (16a, 16b, 16c, 16c) includes multiple laser emitters (16a, 16b, 16c, 16c).

12. The laser accessory device (10) of claim 1, wherein each of the one or more laser emitters (16a, 16b, 16c, 16c) emits at one or more wavelengths within a spectrum selected from the group consisting of ultraviolet, visible, and infrared spectra.

13. The laser accessory device (10) of claim 1, wherein the one or more laser emitters (16a, 16b, 16c, 16c) comprise one or more of:
a visible light laser for aiming;
a visible light laser for illumination;
an infrared light laser for aiming; and
an infrared light laser for illumination.

14. The laser accessory device (10) of claim 1, wherein the first cover assembly (100) is configured to block laser beam emissions from the one or more laser emitters (16a, 16b, 16c, 16c) when the first safety cover is in the closed position.

15. The laser accessory device (100) of claim 1, wherein the first cover assembly (100) is configured to attenuate laser beam emissions from the one or more laser emitters (16a, 16b, 16c, 16c) when the first safety cover is in the closed position.

## Patentansprüche

1. Laserzubehörvorrichtung (10), umfassend:
ein Gehäuse (12), das eine Vorderseite mit einer Öffnung (14), eine der Vorderseite gegenüberliegende Rückseite, eine linke Seite, eine der linken Seite gegenüberliegende rechte Seite, eine Oberseite und eine der Oberseite gegenüberliegende Unterseite aufweist;
einen oder mehrere Laseremitter (16a, 16b, 16c, 16c) innerhalb des Gehäuses, die dazu konfiguriert sind, einen Strahl durch die Öffnung zu emittieren;
**dadurch gekennzeichnet, dass** die Laserzubehörvorrichtung einen Bausatz aus einer ersten und einer zweiten austauschbaren Abdeckbaugruppe (100, 200) umfasst, wobei jede der Abdeckbaugruppen wahlweise an dem Gehäuse anbringbar und von diesem entfernbar ist;
wobei die erste Abdeckbaugruppe (100) zum Positionieren auf der Vorderseite dient, wobei die erste Abdeckbaugruppe eine erste Sicherheitsabdeckung (136) und einen ersten Rahmen (104) umfasst, der die erste Sicherheitsabdeckung an dem Gehäuse befestigt, wobei die erste Sicherheitsabdeckung zwischen einer geschlossenen Position, in der sie die Öffnung abdeckt, und einer offenen Position, in der sie die Öffnung nicht abdeckt, bewegbar ist, wobei die Laserzubehörvorrichtung ferner umfasst:
die zweite Abdeckbaugruppe (200), die zum Positionieren auf der Vorderseite anstelle der ersten Abdeckbaugruppe dient, wobei die zweite Abdeckanordnung eine zweite Sicherheitsabdeckung (236) und einen zweiten Rahmen (204) zum Befestigen der zweiten Sicherheitsabdeckung an dem Gehäuse umfasst, wobei die zweite Sicherheitsabdeckung zwischen einer geschlossenen Position, in der sie die Öffnung abdeckt, und einer offenen Position, in der sie die Öffnung nicht abdeckt, bewegbar ist,
wobei die erste Sicherheitsabdeckung (136) über die Vorderseite hinausragt, um einen Schirm (136) über der Öffnung zu bilden, wenn die erste Abdeckbaugruppe (100) an dem Gehäuse befestigt ist und die erste Sicherheitsabdeckung in der geöffneten Position ist, und wobei ferner die zweite Sicherheitsabdeckung (200) auf der Oberseite des Gehäuses verstaut ist, wenn die zweite Sicherheitsabdeckbaugruppe an dem Gehäuse befestigt ist und die zweite Sicherheitsabdeckung in der geöffneten Position ist.

2. Laserzubehörvorrichtung (10) nach Anspruch 1, wobei die erste Sicherheitsabdeckung (136) an dem Gehäuse verstaut ist, wenn die erste Sicherheitsabdeckung in der geöffneten Position ist.

3. Laserzubehörvorrichtung (10) nach Anspruch 1, wobei die erste Sicherheitsabdeckung (136) auf der Oberseite des Gehäuses verstaut ist, wenn die erste Sicherheitsabdeckung in der geöffneten Position ist.

4. Laserzubehörvorrichtung (10) nach Anspruch 1, wobei der eine oder die mehreren Laseremitter (16a, 16b, 16c, 16c) eine oder mehrere Laserdioden umfassen.

5. Laserzubehörvorrichtung (10) nach Anspruch 1, ferner umfassend eine Stromversorgung, die in dem Gehäuse (12) aufgenommen und mit der Laserdiode wirkverbunden ist, um den einen oder die mehreren Laseremitter (16a, 16b, 16c, 16c) mit Strom zu versorgen.

6. Laserzubehörvorrichtung (10) nach Anspruch 5, wobei die Stromversorgung eine Batterie umfasst, die innerhalb eines Batteriefachs (30) in dem Gehäuse angeordnet ist.

7. Laserzubehörvorrichtung (10) nach Anspruch 6, ferner umfassend eine Batteriefachabdeckung (38), die dazu konfiguriert ist, das Batteriefach (30) lösbar abzudecken.

8. Laserzubehörvorrichtung (10) nach Anspruch 1, wobei die Unterseite eine Klammer (18) zum Koppeln der Laserzubehörvorrichtung an eine Waffenzubehörschiene umfasst.

9. Laserzubehörvorrichtung (10) nach Anspruch 1, ferner umfassend einen oder mehrere Aktivierungsschalter auf der Oberseite und dazu konfiguriert, den einen oder die mehreren Laseremitter (16a, 16b, 16c, 16c) zu betätigen.

10. Laserzubehörvorrichtung (10) nach Anspruch 1, wobei der eine oder die mehreren Laseremitter (16a, 16b, 16c, 16c) einen oder mehrere Ziellaser, einen oder mehrere Beleuchtungslaser oder eine Kombination davon umfassen.

11. Laserzubehörvorrichtung (10) nach Anspruch 1, wobei der eine oder die mehreren Laseremitter (16a, 16b, 16c, 16c) mehrere Laseremitter (16a, 16b, 16c, 16c) umfassen.

12. Laserzubehörvorrichtung (10) nach Anspruch 1, wobei jeder von dem einen oder den mehreren Laseremittern (16a, 16b, 16c, 16c) bei einer oder mehreren Wellenlängen innerhalb eines Spektrums emittiert, das ausgewählt ist aus der Gruppe bestehend aus den Spektren ultraviolett, sichtbar und infrarot.

13. Laserzubehörvorrichtung (10) nach Anspruch 1, wobei der eine oder die mehreren Laseremitter (16a, 16b, 16c, 16c) einen oder mehrere der Folgenden umfassen:
einen Laser mit sichtbarem Licht zum Zielen;
einen Laser mit sichtbarem Licht zum Beleuchten;
einen Infrarotlichtlaser zum Zielen; und
einen Infrarotlichtlaser zum Beleuchten.

14. Laserzubehörvorrichtung (10) nach Anspruch 1, wobei die erste Abdeckbaugruppe (100) dazu konfiguriert ist, Laserstrahlemissionen von dem einen oder den mehreren Laseremittern (16a, 16b, 16c, 16c) zu blockieren, wenn die erste Sicherheitsabdeckung in der geschlossenen Position ist.

15. Laserzubehörvorrichtung (100) nach Anspruch 1, wobei die erste Abdeckbaugruppe (100) dazu konfiguriert ist, Laserstrahlemissionen von dem einen oder den mehreren Laseremittern (16a, 16b, 16c, 16c) abzuschwächen, wenn die erste Sicherheitsabdeckung in der geschlossenen Position ist.

## Revendications

1. Dispositif accessoire laser (10), comprenant :
un boîtier (12) ayant un côté avant ayant un orifice (14), un côté arrière opposé au côté avant, un côté gauche, un côté droit opposé au côté gauche, un côté supérieur, et un côté inférieur opposé au côté supérieur ;
un ou plusieurs émetteurs laser (16a, 16b, 16c, 16c) à l'intérieur du boîtier configurés pour émettre un faisceau à travers l'orifice ;
**caractérisé en ce que** le dispositif accessoire laser comprend un kit de premier et second ensembles de couvercles interchangeables (100, 200), chacun desdits ensembles de couvercles étant sélectivement fixable et amovible du boîtier ;
le premier ensemble de couvercle (100) destiné à être positionné sur le côté avant, le premier ensemble de couvercle comportant un premier couvercle de sécurité (136) et un premier cadre (104) fixant le premier couvercle de sécurité au boîtier, le premier couvercle de sécurité étant mobile entre une position fermée recouvrant l'orifice et une position ouverte ne recouvrant pas l'orifice, le dispositif accessoire laser comprenant également :
le second ensemble de couvercle (200) destiné à être positionné sur le côté avant à la place du premier ensemble de couvercle, le second ensemble de couvercle comportant un second couvercle de sécurité (236) et un second cadre (204) destiné à fixer le second couvercle de sécurité au boîtier, le second couvercle de sécurité étant mobile entre une position fermée recouvrant l'orifice et une position ouverte ne recouvrant pas l'orifice,
dans lequel le premier couvercle de sécurité (136) dépasse du côté avant pour former une visière (136) au-dessus de l'orifice lorsque le premier ensemble de couvercle (100) est fixé au boîtier et le premier couvercle de sécurité est dans la position ouverte, et dans lequel également le second couvercle de sécurité (200) est rangé sur le côté supérieur du boîtier lorsque le second ensemble de couvercle de sécurité est fixé au boîtier et le second couvercle de sécurité est dans la position ouverte.

2. Dispositif accessoire laser (10) selon la revendication 1, dans lequel le premier couvercle de sécurité (136) est rangé sur le boîtier lorsque le premier couvercle de sécurité est en position ouverte.

3. Dispositif accessoire laser (10) selon la revendication 1, dans lequel le premier couvercle de sécurité (136) est rangé sur le côté supérieur du boîtier lorsque le premier couvercle de sécurité est en position ouverte.

4. Dispositif accessoire laser (10) selon la revendication 1, dans lequel les un ou plusieurs émetteurs laser (16a, 16b, 16c, 16c) comprennent une ou plusieurs diodes laser.

5. Dispositif accessoire laser (10) selon la revendication 1, comprenant également une alimentation électrique montée dans le boîtier (12) et reliée fonctionnellement à la diode laser pour alimenter les un ou plusieurs émetteurs laser (16a, 16b, 16c, 16c).

6. Dispositif accessoire laser (10) selon la revendication 5, dans lequel l'alimentation comprend une batterie disposée dans un compartiment de batterie (30) du boîtier.

7. Dispositif accessoire laser (10) selon la revendication 6, comprenant également un couvercle (38) de compartiment de batterie configuré pour recouvrir de manière amovible le compartiment de batterie (30).

8. Dispositif accessoire laser (10) selon la revendication 1, le côté inférieur comprenant une pince (18) pour l'accouplement du dispositif accessoire laser à un rail d'accessoire d'arme.

9. Dispositif accessoire laser (10) selon la revendication 1, comprenant également un ou plusieurs commutateurs d'activation sur le côté supérieur et configurés pour actionner les un ou plusieurs émetteurs laser (16a, 16b, 16c, 16c).

10. Dispositif accessoire laser (10) selon la revendication 1, dans lequel les un ou plusieurs émetteurs laser (16a, 16b, 16c, 16c) comprennent un ou plusieurs lasers de visée, un ou plusieurs lasers d'éclairage, ou une combinaison de ceux-ci.

11. Dispositif accessoire laser (10) selon la revendication 1, dans lequel les un ou plusieurs émetteurs laser (16a, 16b, 16c, 16c) comportent de multiples émetteurs laser (16a, 16b, 16c, 16c).

12. Dispositif accessoire laser (10) selon la revendication 1, dans lequel chacun des un ou plusieurs émetteurs laser (16a, 16b, 16c, 16c) émet à une ou plusieurs longueurs d'onde dans un spectre choisi dans le groupe constitué par les spectres ultraviolets, visibles et infrarouges.

13. Dispositif accessoire laser (10) selon la revendication 1, dans lequel les un ou plusieurs émetteurs laser (16a, 16b, 16c, 16c) comprennent un ou plusieurs parmi :
un laser à lumière visible pour la visée ;
un laser à lumière visible pour l'éclairage ;
un laser à lumière infrarouge pour la visée ; et
un laser à lumière infrarouge pour l'éclairage.

14. Dispositif accessoire laser (10) selon la revendication 1, dans lequel le premier ensemble de couvercle (100) est configuré pour bloquer les émissions de faisceau laser des un ou plusieurs émetteurs laser (16a, 16b, 16c, 16c) lorsque le premier couvercle de sécurité est en position fermée.

15. Dispositif accessoire laser (100) selon la revendication 1, dans lequel le premier ensemble de couvercle (100) est configuré pour atténuer les émissions de faisceau laser des un ou plusieurs émetteurs laser (16a, 16b, 16c, 16c) lorsque le premier couvercle de sécurité est en position fermée.
